(19) Europäisches Patentamt
European Patent Office
Office européen des brevets

(11) Publication number: **0 174 053**
**B1**

(12) **EUROPEAN PATENT SPECIFICATION**

(45) Date of publication of patent specification: **06.04.88**

(51) Int. Cl.[4]: **C 04 B 28/04** // (C04B28/04, 22:08, 24:16)

(21) Application number: **85201384.6**

(22) Date of filing: **02.09.85**

(54) **Compositions for controlling the fluid loss from cement slurries used in well cementing.**

(30) Priority: **07.09.84 FR 8413788**

(43) Date of publication of application:
**12.03.86 Bulletin 86/11**

(45) Publication of the grant of the patent:
**06.04.88 Bulletin 88/14**

(84) Designated Contracting States:
**DE GB IT NL**

(56) References cited:
**FR-A-2 314 904**
**FR-A-2 540 098**
**GB-A-2 051 031**
**US-A-3 892 704**

**CHEMICAL ABSTRACTS, vol. 95, no. 10, 7th September 1981, page 261, no. 85172s, Columbus, Ohio, US; & SU - A - 808 432 (L.V. LOVETSKII) 28-02-1981**

**CHEMICAL ABSTRACTS, vol. 95, no. 24, 14th December 1981, page 293, no. 208451s, Columbus, Ohio, US; R.T. SHUGALEI et al.: "Cement mortars with sodium aluminate for antifiltration screens under severe hydrogeological conditions", & ENERG. STROIT. 1981, (6), 43-5**

(73) Proprietor: **PUMPTECH N.V.**
**Atlantic House Noorderlaan 147 Bus 5C**
**B-2030 Antwerpen (BE)**

(72) Inventor: **Defosse, Camille**
**c/o M.Mme Louis Dormal 40 rue du Sanctuaire**
**B-5004 Bouge (BE)**
Inventor: **MacLachlan, Richard c/o Balikpapan Station**
**Dowell Schlumberger (Eastern) Inc. P.O. Box 85**
**Balikpapan Kalimantan Timur (IN)**

(74) Representative: **Richebourg, Michel François**
**Etudes et Fabrication Dowell Schlumberger Z.I. Molina La Chazotte B.P. 90**
**F-42003 Saint-Etienne Cédex 1 (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 174 053 B1

**Description**

The present invention relates to cement compositions used for cementing wells, and in particular oil wells.

More precisely, the present invention relates to additives for cementing compositions used for cementing wells, said additives being intended to reduce fluid loss from the cement slurry to the underground formations through which the well passes.

It is common practice to use Portland cement slurries for cementing the annulus formed between the tubing and the underground formations. The point of using such slurries stems both from commercial considerations and from their ability to harden and form a highly effective hydraulic link between the various materials used in well construction and the various types of rock which are drilled. The need for such slurries does not terminate with drilling, but continues during routine well maintenance, and such slurries are generally the last materials used at the end of a well's life when it is plugged prior to being abandoned.

In order to satisfy the various operating conditions and the various functions required of a Portland cement slurry, its performance is modified by specific additives which confer and/or improve various characteristics thereof. These characteristics may relate to the period when the cement slurry is still in the liquid state, or to the period when it is in the hardened state.

One of the most important characteristics of a liquid slurry lies in its ability to oppose dehydration when it comes into contact with permeable formations and when it is simultaneously subjected to a pressure which is higher than the pressure in the pores of the formation. Under such conditions the cement slurry is literally "filtered" leaving a filter cake on the surface of the formation with fluid passing from the cement into the matrix of the formation. A cement slurry whose fluid loss characteristics are poorly controlled may, under such conditions, lose water into the formation. This fluid loss gives rise to a slurry which has a shortened hardening time and whose fluid behavior is radically modified.

The filter cake which is deposited on the formation may, in the most severe cases, accumulate to have a thickness such that all fluid passage is prevented after the permeable zone, which gives rise to the cement slurry being incompletely put into place.

In such cases, it is necessary to use an agent for controlling the loss of fluid from cement compositions in order to limit the loss of interstitial water from the slurry into and through the pores of the formation. Examples of the prior art concerning this subject and describing the two main chemical classes of fluid loss controlling agents for cement compositions are U.S. Patent Nos. 3 234 154, 3 483 007, 3 491 049 and 4 258 790.

Considerable progress has been provided by the additives described in French Patent Application No. 83-013 69 filed on January 28, 1983 by the present applicant (EP—A—118332).

According to this document, excellent fluid loss control agents are obtained by heat treating aqueous solutions containing certain terpolymers in the presence of an acid.

These terpolymers are described in U.S. Patent No. 4 048 077 for a different application concerning drilling muds.

It is pointless to repeat the detail of the teaching of said French Patent Application herein, since the person skilled in the art can readily refer thereto.

It is merely mentioned that the fluid loss controlling additives for cement compositions described in said application consists in the product of heat treating, in the presence of at least one acid (in particular hydrochloric or sulfuric acid), an aqueous solution of at least one terpolymer constituted from the following monomer fractions:

I.

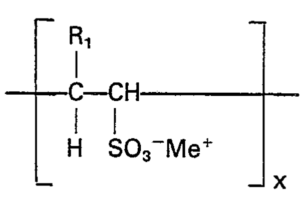

II.

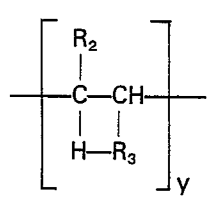

III.

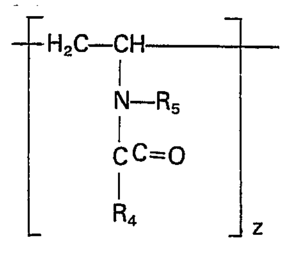

in which:

$R_1$ and $R_2$ represent H, or $CH_3$; $R_3$ represents $CONH_2$, CN or $COOCH_3$; $R_4$ represents H, $CH_3$ or $C_2H_5$; and $R_5$ represents $CH_3$ or $C_2H_5$; or else $R_4$ and $R_5$ together form a propylene group forming a pyrrolidone radical together with the group NCO; the cation for compensating the $Me^+$ being chosen from $NH_4^+$, $K^+$, $Na^+$, or $Li^+$; and the parts by weight of the starting monomers, *x*, *y*, and *z* for the formulas, I, II, and III respectively, lie in the ranges 5 to 50, 25 to 92, and 3 to 70 respectively.

The above-mentioned compositions described in the said French Patent Application generally give complete satisfaction when they are implemented on site.

However, it has been observed that, surprisingly, the use of some kinds of cement gives rise to problems with the use of the recommended additives.

Such behavior turned out to be completely inexplicable to the person skilled in the art.

It has been discovered that the effectiveness of fluid loss control agents of the carboxylic polymer type described in the said above-mentioned patent application varies depending on the quality of the cement. It has even been observed that the fluid loss control obtained in this way varies, for a given class and a given brand of cement, from one lot to another.

It has finally been discovered that, in an unexpected manner, the concentration of calcium and magnesium ions in the interstitial water of the slurry varies from one cement to another for identical hydration times, with some cements giving off considerably more divalent cations than others. This behavior appears to depend on certain parameters in the fabrication of the cement, such as the baking and crushing conditions, for example, or the surface state of the cement grains, etc. Thus, cements having the same composition may perform differently if they have not been identically prepared. This phenomenon was only discovered because of the problems it raises when using the above-mentioned additives.

In the context of the present invention, the merit of the applicant is to have properly posed the technical problem even though it relates to poorly explained phenomena, as mentioned above.

The merit of the applicant thus lies in posing the technical problem with which it was confronted, which problem manifested itself in the form of aberrant behaviour, which in simple terms consists in various cements releasing greater or lesser amounts of divalent $Ca^{++}$ and $Mg^{++}$ cations at the moment of hydration. The applicant has subsequently sought agents capable of opposing the consequences of this phenomenon. Once the problem had been posed in this manner, it would have been fairly logical to think of using agents capable of capturing calcium and magnesium ions as fast as they appeared in the mix water. However, it was not obvious that the additives which might be thought of would behave properly under the severe conditions which are encountered at the depths reached by oil and gas wells in particular, e.g. the severe conditions of temperature and pressure.

Nor was it obvious that the additives which might be thought of would behave normally, given the complexity of the system constituted by water and the solids of a cement slurry during hydration.

Indeed, various tests performed have shown that some of the additives which might have been considered gave rise to unsatisfactory behaviour in practice, for example at high temperature, due to phenomena of instability or of reabsorption.

Even more surprisingly, other additives turned out to give no results, even at low temperatures.

The behaviour of such additives is tabulated in Tables 1 and 2 below. Thus, one of the aspects of the present invention also concerns choosing suitable additives which are usable in the very special technical field to which the invention applies.

In accordance with another aspect of the invention, it has been discovered that adding a low concentration of materials capable of capturing calcium ions in solution improves the effectiveness of the carboxylated polymers used as fluid loss control agents according to the above-mentioned French Patent Application No. 83-013 69 (EP—A—118 332).

This improvement of fluid loss control may be obtained both for various brands and classes of cement and also for different qualities of cement within a given brand of cement.

These results are obtained either by adding a specific product to the mix water or else by dry mixing with a cement. It may be observed that the rheological characteristics of slurries modified in this way are not modified to any significant extent (cf. Table 1 and Table 2 below).

The development work on the invention was performed using various brands of API class G cement as commonly used in the various regions where the person skilled in the art is operating. A cement to mix water ratio of 2.273 BWOC was used. Additional tests have shown that the invention is applicable to cement slurries in which the cement to mix water ratio lies in the range 3.0 to 1.0 BWOC.

A cement superplastifier was incorporated in the specific slurry compositions, which superplastifier consisted in a condensation product from the naphthalene/formaldehyde family. The concentration used was chosen so as to obtain total dispersion in the slurry without provoking excessive settling of cement particles nor the development of free water. The effect of varying the superplastifier concentration was also studied, and it was shown that the effects of the superplastifier and the additives in accordance with the present invention were neither interactive nor mutually exclusive. In other words, there is no synergy between the superplastifier and additives in accordance with the invention.

It is not possible to give accurate figures for the usable concentration of superplastifier. The quantity required to satisfy the above criteria varies from one class of cement to another. By way of example, the amount of superplastifier used may lie in the range of 0.10% to 1.0% by weight of cement, and the person skilled in the art can readily determine the most appropriate concentration as a function of the above criteria.

A retarder was also incorporated in the slurries to slow down cement setting, and the retarder consisted in a commercialized product of the lignosulfonate type, as is well known to the person skilled in the art. It was possible to show that additives in accordance with the invention have little or no effect on the activity of the retarder over a wide range of additive concentrations. Likewise, it was possible to show that varying the concentration of the retarder had little or no effect on the activity of the additives in accordance with the invention.

It is not possible to give accurate figures for the specific concentration of retarder to be used since the appropriate concentration varies from one class of cement to another and is also a function of the time

available for pumping the cement in position. By way of example, the concentrations normally used lie in the range 0.05% to 3.0% retarder by weight of cement.

In all cases, the slurry compositions subjected to the tests were prepared by incorporating an agent for opposing air entrainement in order to limit the aeration of the slurry during its preparation and to minimize the problems encountered when working on slurries containing entrained air. In all the tests this agent was used at less than 0.05% by weight of cement.

All the preparation and testing operations were performed in accordance with the API 10 standard (first edition) published in Jaunary 1982.

The following examples are illustrations of the invention, but they do not limit its scope.

Example 1

In this test one class of cement was used together with various agents capable of precipitating calcium ions.

The base composition of the cement slurry was as follows:

Norcem API class G cement;
0.16% by weight of cement of polymer R111;
0.44% by weight of cement of superplastifier/dispersing agent;
x% by weight of cement of $[W]_xM_yO_z$; and
44% by weight of cement of fresh water.

The volume of the water was adjusted as a function of the volume of the liquid additives.

All the additives were premixed in the water for 15 seconds at a low shear rate, prior to beginning the mixing procedure according to the API standard.

The tests were performed at a temperature of 29.4°C.

The results of the tests are tabulated in Table 1 below.

TABLE 1

| $[W]_xM_yO_z$ Additives in accordance with the invention | % BWOC | R111 % BWOC | Dispersing agent % BWOC | BHCT PV [1] | BHCT YV [2] | Fluid loss API std ml/30 min. | Comments |
|---|---|---|---|---|---|---|---|
| — | — | 0.16 | 0.44 | 58 | 3.97 | 298 | Base composition |
| $AMM.MO_4$ | 0.157 | 0.16 | 0.44 | 55 | 2.06 | 314 | No improvement |
| | 0.469 | 0.16 | 0.44 | 57 | 2.02 | 354 | |
| $AMM.WO_4$ | 0.230 | 0.16 | 0.44 | 64 | 1.44 | 199 | Improvement |
| | 0.689 | 0.16 | 0.44 | 58 | 4.17 | 206 | |
| $SOD.AsO_2$ | 0.115 | 0.16 | 0.44 | 73 | 6.23 | 349 | No improvement |
| | 0.345 | 0.16 | 0.44 | 50 | 39.3 | 551 | |
| $SOD.HAsO_4$ | 0.275 | 0.16 | 0.44 | 29 | 4.50 | 349 | Improvement |
| | 0.825 | 0.16 | 0.44 | 40 | 0.479 | 147 | |
| $SOD.CO_3$ | 0.252 | 0.16 | 0.44 | 38 | 4.69 | 253 | Improvement |
| | 0.755 | 0.16 | 0.44 | 34 | 9.58 | 163 | |
| $SOD.HCO_3$ | 0.073 | 0.16 | 0.44 | 44 | 4.02 | 334 | No improvement |
| | 0.220 | 0.16 | 0.44 | 34 | 3.78 | 577 | |
| $AMM.VO_4$ | 0.103 | 0.16 | 0.44 | 53 | 4.26 | 372 | No improvement |
| | 0.310 | 0.16 | 0.44 | 56 | 0.43 | 350 | |
| AMM.F | 0.033 | 0.16 | 0.44 | 62 | 4.79 | 200 | Improvement |
| | 0.100 | 0.16 | 0.44 | 58 | 3.54 | 272 | |

Note:
In all Tables, BHCT means "Bottom Hole Circulating Temperature".

Notes:
Rheological data were obtained using the Bingham plastic model for fluids under laminar flow.
[1] PV=plastic viscosity (cP)
[2] YV=yield value (Pa)

R111=a copolymer containing acrylate monomers (molecular weight ±135 K) such as those described in French Patent Application No. 83-01369

AMM.$MO_4$=$[NH_4]_6Mo_7O_{24} \cdot 4H_2O$

AMM.$WO_4$=$[NH_4]_{10}W_{12}O_{41} \cdot 5H_2O$

SOD.$AsO_2$=$NaAsO_2$

SOD.$HAsO_4$=$Na_2HAsO_4 \cdot 7H_2O$

SOD.$CO_3$=$Na_2CO_3 \cdot H_2O$

SOD.$HCO_3$=$NaHCO_3$

AMM.$VO_4$=$[NH_4]_2VO_4$

AMM.F=$NH_4F$

BWOC=by weight of cement

All the above materials are known to give highly insoluble Ca/Mg salts. However it may be observed on examining Table 1 that only some of these materials are useful in the application of the present invention.

Only those materials which gave a positive effect were subjected to the high temperature test (see Example 2 below).

Example 2

The purpose of these tests was the same as for the tests tabulated in Table 1, but performed at high temperature.

These tests were performed at 85°C.

The base composition of the cement slurry was the following:

Norcem API class. G cement;

0.31% by weight of cement of polymer R111;

0.87% by weight of cement of superplastifier/dispersing agent;

0.085% by weight of cement of lignosulfonate type retarder;

x% by weight of cement of $[W]_xM_yO_z$; and

44% by weight of cement of fresh water.

The volume of fresh water was adjusted to take account of the volume of the added liquid additives.

All the ingredients were premixed in the mix water for 15 seconds before beginning the slurry preparation procedure according to the above-mentioned API standard.

The results are tabulated in Table 2 below.

TABLE 2

| $[W]_xM_yO_z$ (Additives in accordance with the invention) | % BWOC | R111 % BWOC | Dispersing agent % BWOC | Retard. % BWOC | BHCT PV [1] | BHCT YV [2] | Fluid loss API std. ml/30 min. | Comments |
|---|---|---|---|---|---|---|---|---|
| — | — | 0.31 | 0.87 | 0.085 | 41 | 0.766 | 254 | Base composition |
| SOD.$MO_4$ | 0.213 | 0.31 | 0.87 | 0.085 | 37 | 0.00 | 213 | Uncertain |
| | 0.693 | 0.31 | 0.87 | 0.085 | 44 | 1.10 | 246 | |
| SOD.$WO_4$ | 0.207 | 0.31 | 0.87 | 0.085 | 58 | 3.16 | 206 | Uncertain |
| | 0.870 | 0.31 | 0.87 | 0.085 | 59 | 3.74 | 230 | |
| SOD.$SiO_3$ META | 0.107 | 0.31 | 0.87 | 0.085 | 35 | 0 | 260 | No improvement |
| | 0.322 | 0.31 | 0.87 | 0.085 | 27 | 0 | 146 | |
| SOD.$SiO_3$ ORTHO | 0.100 | 0.31 | 0.87 | 0.085 | — | — | 262 | Uncertain |
| SOD.F | 0.037 | 0.31 | 0.87 | 0.085 | 47 | 0.192 | 198 | Improvement |
| | 0.111 | 0.31 | 0.87 | 0.085 | 39 | 1.67 | 148 | |

Notes:

Rheological data were obtained using the Bingham plastic model for fluids under laminar flow.

1 PV=plastic viscosity (cP)

2 YV=yield value (Pa)

R111=a copolymer containing acrylate monomers (molecular weight ±135 K) such as those described in French Application Patent No. 83-01369

SOD.$MO_4$=$[Na]_2MO_4 \cdot 2H_2O$

SOD.$WO_4$=$[Na]_2WO_4 \cdot 2H_2O$

SOD.$SiO_3$=$Na_2SiO_3$ Metasilicate

SOD.$SiO_3$=$Na_2SiO_3$ Orthosilicate

SOD.F=NaF

These tests show that some of the materials which are active at low temperature are not active at high temperature.

Example 3

These tests were performed by varying the type of cement, and the most effective agent in accordance with the present invention was used, namely sodium fluoride.

The base composition of the cement slurry was as follows:

API class G cement (see table 3);

0.31% by weight of cement of polymer R111;

0.87% by weight of cement of superplastifier/dispersing agent;

0.085% by weight of cement of lignosulfonate type retarder;

x% by weight of cement of NaF; and

44% by weight of cement of fresh water.

The volume of fresh water was adjusted to take account of the volume of the added liquid additives.

All the ingredients were premixed in the mix water for 15 seconds before beginning the slurry preparation procedure according to the API standard.

The tests were performed at a temperature of 85°C.

The results are tabulated in Table 3 below.

It can be seen that sodium fluoride is effective regardless of the type of cement used.

TABLE 3

| Cement | R111 % BWOC | Dispersing agent % BWOC | Retarder % BWOC | NaF % BWOC | BHCT PV [1] | BHCT YV [2] | Fluid loss API std. ml/30 min | Comments |
|---|---|---|---|---|---|---|---|---|
| "Blue Circle" | 0.31 | 0.87 | 0.085 | 0.05 | 37 | 4.50 | 84 | No harmful action |
| | 0.31 | 0.87 | 0.085 | 0.19 | 65 | 12.4 | 60 | |
| "Cemoil" | 0.31 | 0.87 | 0.085 | 0.05 | 27 | 1.24 | 76 | No harmful action |
| | 0.31 | 0.87 | 0.085 | 0.19 | 39 | 7.18 | 78 | |
| "Dhahran" | 0.31 | 0.87 | 0.085 | — | 41 | 0.766 | 254 | Positive action |
| | 0.31 | 0.87 | 0.085 | 0.04 | 47 | 0.192 | 198 | |
| | 0.31 | 0.87 | 0.085 | 0.19 | 45 | 3.78 | 84 | |
| "Dyckhoff (Gulf)" | 0.31 | 0.87 | 0.085 | 0.19 | 27 | 1.44 | 50 | No harmful action |
| "Dyckhoff (Black)" | 0.31 | 0.87 | 0.085 | — | — | — | 87 | No harmful action |
| | 0.31 | 0.87 | 0.085 | 0.05 | 37 | 2.35 | 92 | |
| | 0.31 | 0.87 | 0.085 | 0.19 | 42 | 5.269 | 80 | |
| "Indocement" | 0.31 | 0.87 | 0.085 | — | 61 | 5.27 | 174 | Positive action |
| | 0.31 | 0.87 | 0.085 | 0.05 | 48 | 2.87 | 110 | |
| | 0.31 | 0.87 | 0.085 | 0.19 | 45 | 2.87 | 74 | |
| "Italcementi" | 0.31 | 0.87 | 0.085 | — | 48 | 0.479 | 240 | Positive action |
| | 0.31 | 0.87 | 0.085 | 0.05 | 55 | 2.39 | 201 | |
| | 0.31 | 0.87 | 0.085 | 0.19 | 93 | 22.9 | 116 | |
| "Kaiser" | 0.31 | 0.87 | 0.085 | — | 25 | 0.479 | 110 | Positive action |
| | 0.31 | 0.87 | 0.085 | 0.05 | 28 | 0 | 66 | |
| | 0.31 | 0.87 | 0.085 | 0.19 | 30 | 1.44 | 60 | |
| "Mara" | 0.31 | 0.87 | 0.085 | 0.05 | 36 | 2.16 | 68 | No harmful action |
| | 0.31 | 0.87 | 0.085 | 0.19 | 43 | 3.83 | 80 | |
| "Norcem" | 0.31 | 0.87 | 0.085 | — | 41 | 0.766 | 254 | Positive action |
| | 0.31 | 0.87 | 0.085 | 0.05 | 32 | 0 | 54 | |
| | 0.31 | 0.87 | 0.085 | 0.19 | 41 | 2.39 | 68 | |
| "Origny" | 0.31 | 0.87 | 0.085 | — | 28 | 0 | 145 | Positive action |
| | 0.31 | 0.87 | 0.085 | 0.05 | 35 | 1.87 | 66 | |
| | 0.31 | 0.87 | 0.085 | 0.19 | 39 | 3.83 | 60 | |

Notes:

Rheological data were obtained using the Bingham plastic model for fluids under laminar flow.

[1] PV=plastic viscosity

[2] YV=yield value (Pa)

The above Table 3 shows that "Blue Circle", "Cemoil", both types of "Dyckerhoff", and, "Mara" cements which perform well without a secondary additive in accordance with the invention do not suffer from having such additives added to them.

For the other brands of cement, whose performance without the additive is mediocre, the addition of secondary additives in accordance with the invention leads to considerable improvement in the fluid loss properties without harming their other properties.

Example 4

These tests were performed to show the positive effect of including a highly effective calcium ion capturing agent in cement slurries made from a single brand of cement but incorporating various fluid loss control agents.

The base composition of the slurry was as follows:

Norcem API class G cement;
x% by weight of cement fluid loss control agent;
y% by weight of cement of superplastifier/dispersing agent;
z% by weight of cement of lignosulfonate type retarder;
A% by weight of cement of KF; and
44% by weight of cement of fresh water.

The volume of fresh water was adjusted to take account of the volume of the liquid additive added.

All the additives were premixed in the mix water for 15 seconds before beginning the slurry preparation procedure in accordance with the API standard.

The tests were performed at 85°C.

The results are tabulated in Table 4 below.

This table shows that fluid loss control is improved by potassium fluoride whenever the fluid loss control agent consists in a carboxylated polymer. If the fluid loss control agent is not a carboxylated polymer, potassium fluoride does not provide any improvement.

TABLE 4

| Polymer | Conc. % BWOC | Dispersing agent % BWOC | Retarder % BWOC | KF % BWOC | BHCT PV [1] | BHCT YV [2] | Fluid loss API std. ml/30 min | Comments |
|---|---|---|---|---|---|---|---|---|
| PVTS | 0.45 | 0.87 | 0.085 | — | 34 | 0.623 | 313 | marginal |
| | 0.45 | 0.87 | 0.085 | 0.10 | 42 | 4.21 | 297 | action |
| | 0.45 | 0.87 | 0.085 | 0.20 | 36 | 9.58 | 326 | |
| | 0.30 | 0.87 | 0.085 | — | 21 | −1.48 | 175 | settling |
| | 0.15 | 0.87 | 0.085 | — | 28 | −2.58 | 442 | settling |
| PSS | 2.00 | 0.87 | 0.085 | — | N/A | N/A | — | too viscous |
| | 1.00 | 0.87 | 0.085 | — | N/A | N/A | — | too viscous |
| | 0.50 | 0.87 | 0.085 | — | 101 | 27.8 | 267 | marginal |
| | 0.50 | 0.87 | 0.085 | 0.10 | 85 | 40.2 | 209 | action |
| HEC | 0.10 | 0.87 | 0.085 | — | 28 | 2.87 | 549 | marginal |
| | 0.10 | 0.87 | 0.085 | 0.10 | 26 | 4.64 | 395 | action |
| | 0.10 | 0.87 | 0.085 | 0.20 | 28 | 6.23 | 399 | |
| CMHEC | 0.10 | 0.87 | 0.085 | — | 22 | −2.25 | — | settling |
| | 0.30 | 0.87 | 0.085 | — | 34 | −0.91 | — | settling |
| | 0.60 | 0.87 | 0.085 | — | 60 | 1.67 | 40 | marginal |
| | 0.60 | 0.87 | 0.085 | 0.10 | 68 | 4.36 | 32 | action |
| | 0.60 | 0.87 | 0.085 | 0.20 | 96 | 6.23 | 36 | |
| ACR | 0.53 | 0.87 | 0.085 | — | N/A | N/A | — | too viscous |
| | 0.27 | 0.87 | 0.085 | — | N/A | N/A | — | too viscous |
| | 0.13 | 0.87 | 0.085 | — | 70 | 2.97 | 196 | highly posi- |
| | 0.13 | 0.87 | 0.085 | 0.10 | 61 | 9.10 | 102 | tive action |
| | 0.13 | 0.87 | 0.085 | 0.20 | 103 | 4.65 | 138 | indications |

Notes:

Rheological data were obtained using the Bingham plastic model for fluids under laminar flow.
[1] PV=plastic viscosity (cP)
[2] YV=yield value (Pa)
PVTS=Polyvinyltoluene sulfonate
PSS=Polystyrene sulfonate (MW=2000 K—3000 K)
HEC=Hydroxyethylcellulose
CMHEC=Carboxymethyl-, hydroxyethylcellulose
ACR=A copolymer containing acrylate monomers (molecular weight=1000 K)
N/A=The system was not applicable on site because of the very high viscosity of the slurry.

These tests relate to the materials commonly used as fluid control agents in cement slurries or in drilling muds.

It may be observed that the present invention only improves performance with the carboxylated polymers ACR and R111.

No improvement or only marginal improvement was observed with sulfonated polymers or HEC.

CMHEC which would have given an improvement does not give an improvement in the presence of KF. This is probably due to the excellent fluid loss control which is already observed without KF.

**Claims**

1. A cement slurry composition for well cementing, in particular oil wells, characterized in that it comprises:—

a cement of a quality such that it gives off an appreciable quantity of $Ca^{++}$ and/or $Mg^{++}$ ions during hydration in mix water;

a polymer type additive as the main fluid loss control agent, said polymer including carboxylate functions or giving off carboxylate functions in the cement slurry; and

a secondary additive which consists of an agent capable of capturing the said $Mg^{++}$ or $Ca^{++}$ cations as fast as they appear in the mixed water, said secondary agent constituting a secondary fluid loss control agent improving the performance of the main agent.

2. A composition according to Claim 1, characterized in that the said secondary additive is selected from: fluorides $F^-$, $WO_4^=$; and $CO_3^=$; and preferably NaF or KF.

3. A composition according to Claim 1 or 2, characterized in that the said main additive consists of the product of heat treating an aqueous solution in the presence of at least one acid said aqueous solution containing at least one terpolymer constituted by the following monomer fractions:

I. 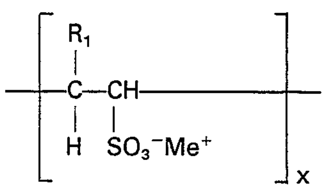 II. 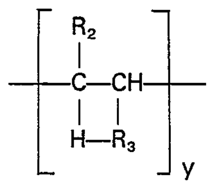 III. 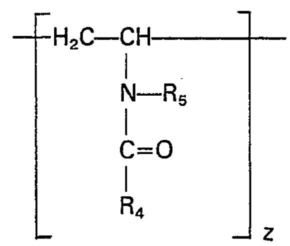

in which: $R_1$ and $R_2$ represent H, or $CH_3$; $R_3$ represents $CONH_2$, CN or $COOCH_3$; $R_4$ represents H, $CH_3$ or $C_2H_5$; and $R_5$ represents $CH_3$ or $C_2H_5$; or else $R_4$ and $R_5$ together form a propylene group forming a pyrrolidone radical together with the group NCO; the cation for compensating the $Me^+$ being chosen from $NH_4^+$, $K^+$, $Na^+$, or $Li^+$; and the parts by weight of the starting monomers *x*, *y*, and *z* for the formulas, I, II and III respectively, lie in the ranges 5 to 50, 25 to 92, and 3 to 70 respectively.

4. The use of materials chosen from: fluorides; molybdates; carbonates; and preferably NaF and KF; as a secondary additive for improving fluid loss control from a cement slurry for cementing wells.

**Patentansprüche**

1. Zemmentaufschlämmungs-Zusammensetzung zur Bohrlochzementation, insbesondere von Ölbohrungen, dadurch gekennzeichnet, daß sie umfaßt:—

einen Zement einer solchen Beschaffenheit, daß er eine merkliche Menge an $Ca^{++}$- und/oder $Mg^{++}$-Ionen während der Hydration im Mischwasser abgibt;

ein polymerartiges Additiv als Hauptfiltrat-Kontrollmittel, wobei das Polymer Carboxylatfunktionen beinhaltet oder Carboxylatfunktionen in die Zementaufschlämmung abgibt; und

ein zweites Additiv, das aus einem Mittel besteht, das fähig ist, die $Mg^{++}$- oder $Ca^{++}$-Kationen so schnellabzufangen, wie sie im Mischwasser erscheinen, wobei das zweite Mittel ein zweites Filtratkontrollmittel darstellt, das die Wirkung des Hauptmittels verbessert.

2. Zusammensetzung nach Anspruch 1, dadurch gekennzeichnet, daß das zweite Additiv ausgewählt ist aus Fluoriden $F^-$, $WO_4^=$; und $CO_3^=$ und vorzugsweise NaF oder KF.

3. Zusammensetzung nach Anspruch 1 oder 2, dadurch gekennzeichnet, daß das Hauptadditiv aus dem Produkt der Hitzebehandlung einer wäßrigen Lösung in Anwesenheit mindestens einer Säure besteht, wobei die wäßrige Lösung mindestens ein Terpolymer enthält, das aus den folgenden Monomerfraktionen aufgebaut ist:

I. 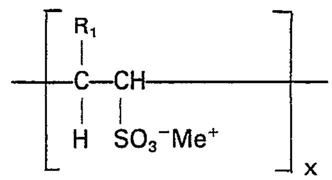 II. 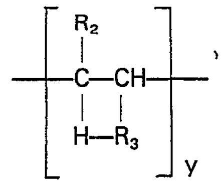 III. 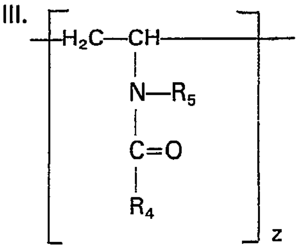

worin $R_1$ und $R_2$ H oder $CH_3$ darstellen; $R_3$ $CONH_2$, CN oder $COOCH_3$ bedeutet; $R_4$ H, $CH_3$ oder $C_2H_5$ bedeutet und $R_5$ $CH_3$ oder $C_2H_5$ bedeutet oder aber $R_4$ und $R_5$ zusammen eine Propylengruppe bilden, die einen Pyrrolidonrest zusammen mit der NCO— Gruppe bildet, wobei das Kation zum Ladungsausgleich von $Me^+$ ausgewählt ist aus $NH_4^+$, $K^+$, $Na^+$ oder $Li^+$ und die Gewichtsteile der Ausgangsmonomeren *x*, *y* und *z* für die Formeln I, II bzw. III im Bereich von 5 bis 50, 25 bis 92 bzw. 3 bis 70 liegen.

4. Verwendung der Materialien, ausgewählt aus Fluoriden, Molybdaten und Carbonaten und vorzugsweise NaF und KF als zweites Additiv zur Verbesserung der Filtratkontrolle einer Zementaufschlämmung für die Bohrlochzementation.

**Revendications**

1. Une composition de laitier de ciment pour la cimentation de puits, en particulier de puits de pètrole, composition caractérisée en ce qu'elle comprend:—

un ciment propre à donner une quantité appréciable d'ions $Ca^{++}$ et/ou $Mg^{++}$ au cours de l'hydratation dans l'eau;

un additif polymère comme agent principal pour réduire les pertes de liquide, polymère qui comprend ou libère des fonctions carboxylate de le laitier de ciment; et

un additif secondaire qui est un agent pouvant fixer ces cations $Mg^{++}$ ou $Ca^{++}$ aussi rapidement qu'ils se forment dans l'eau mélangée, cet agent constituant un agent secondaire pour réduire les pertes de liquide, qui améliore l'efficacité de l'agent principal.

2. Une composition selon la revendication 1 caractérisée en ce que l'additif secondaire est choisi parmi des fluorures $F^-$, $WO_4^=$ et $CO_3^=$, et de préference NaF et KF.

3. Une composition selon la revendication 1 ou 2, caractérisée en ce que l'additif principal est le produit du traitement à chaud d'une solution aqueuse en présence d'un ou de plusieurs acides, solution qui contient un ou plusieurs polymères ternaires formés des motifs monomères suivants:

I. 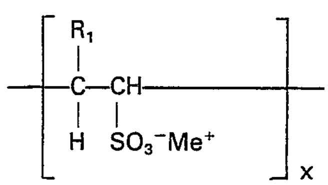 II. 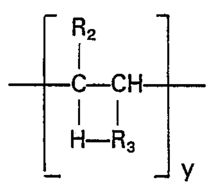 III. 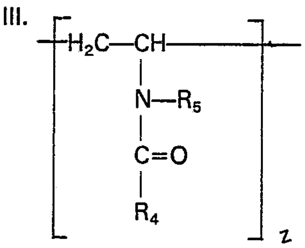

motifs dans lesquels $R_1$ et $R_2$ représentent chacun H ou $CH_3$; $R_3$ représente $CONH_2$, CN ou $COOCH_3$; $R_4$ représente H, $CH_3$ ou $C_2H_5$; et $R_5$ représente $CH_3$ ou $C_2H_5$; ou encore $R_4$ et $R_5$ forment ensemble un groupe propylène constituant un radical de pyrrolidone avec le groupe NCO; le cation $Me^+$ étant choisi parmi $NH_4^+$, $K^+$, et $Li^+$; et les proportions en parties pondérales des monomères, x, y, et z, sont comprises respectivement entre 5 et 50, 25 et 92 et 3 et 70.

4. L'emploi de matières choisies parmi des fluorures, molybdates, carbonates, et de préférence NaF et KF, comme additif secondaire pour réduire les pertes de liquide par infiltrations d'un laitier de ciment pour la cimentation de puits.